# FASCICULE DE BREVET EUROPEEN

(11) **EP 2 544 801 B1**
(45) Date de publication et mention de la délivrance du brevet: **28.11.2018**
(21) Numéro de dépôt: 11713313.2
(22) Date de dépôt: 04.03.2011
(51) Int. Cl.: B01D 63/06, B01D 69/04, B01D 69/10

(54) **GEOMETRIE DE SUPPORT POUR UNE MEMBRANE DE FILTRATION**
SUBSTRATGEOMETRIE FÜR EINE FILTERUNGSMEMBRAN
SUBSTRATE GEOMETRY FOR A FILTRATION MEMBRANE

(30) Priorité: 22.11.2010 FR 1059595; 10.03.2010 FR 1051739
(43) Date de publication de la demande: 16.01.2013
(73) Titulaire: Technologies Avancées & Membranes Industrielles, 26110 Nyons (FR)
(72) Inventeur: LESCOCHE, Philippe, F-26110 Piegon (FR)
(74) Mandataire: Sarlin, Laure V.
(86) Numéro de dépôt international: PCT/FR2011/050458
(87) Numéro de publication internationale: WO 2011/110780

(56) Documents cités:
- EP-A1- 0 780 148
- WO-A1-00/29098

## Description

La présente invention concerne le domaine technique de la séparation tangentielle mettant en oeuvre des éléments de filtration adaptés pour assurer la séparation des molécules ou des particules contenues dans un milieu fluide à traiter. L'objet de l'invention vise, plus précisément, de nouveaux éléments de filtration comportant un support poreux rigide dans lequel des canaux de circulation pour le fluide à filtrer sont aménagés, ledit support présentant une géométrie originale.

L'objet de l'invention trouve une application particulièrement avantageuse dans le domaine de la nanofiltration, l'ultrafiltration, la microfiltration, la filtration ou l'osmose inverse.

Dans l'état de la technique, il est connu de nombreux éléments de filtration réalisés à partir de support à caractère tubulaire ou plan. Il a notamment été proposé des éléments de filtration de type tubulaire comportant un support poreux, par exemple en matière inorganique, telle qu'en céramique, dans lequel est aménagé une série de canaux. Ce support peut être associé à une ou plusieurs couches séparatrices, par exemple en matière inorganique, déposées sur la surface de chaque canal de circulation et liées entre elles et au support, par frittage. Ces couches permettent d'ajuster le pouvoir de filtration de l'élément de filtration.

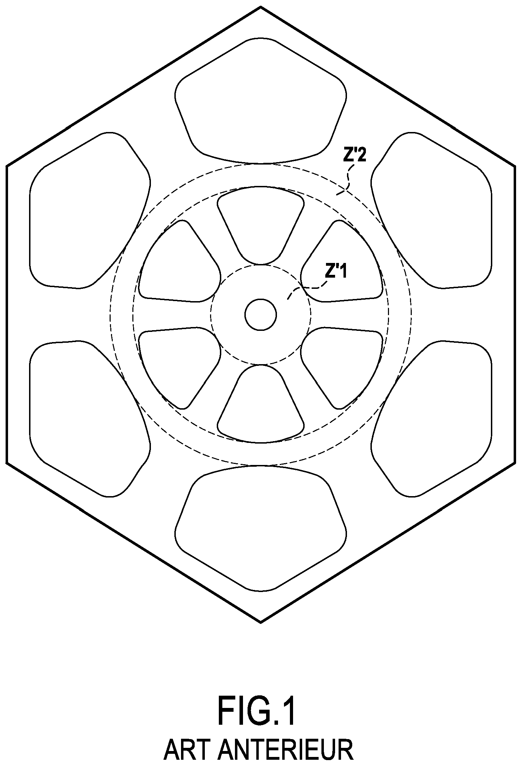

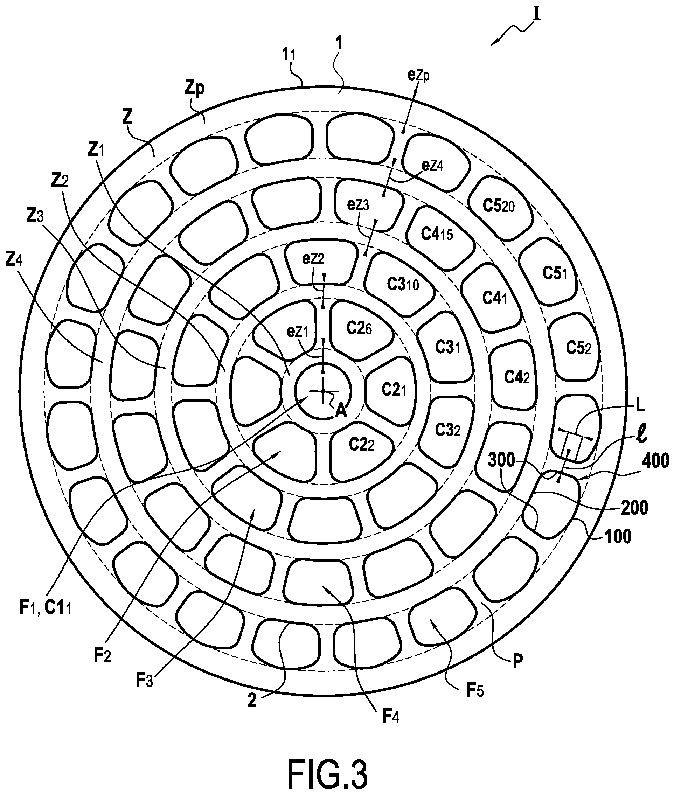

Dans le domaine des éléments de filtration tubulaires, le support poreux rigide est de forme allongée et présente une section transversale droite, le plus souvent polygonale ou circulaire. De nombreux supports comportant une pluralité de canaux parallèles entre eux et à l'axe longitudinal du support poreux, ont déjà été proposés notamment par la demanderesse. Par exemple, des éléments de filtration comportant une série de canaux non circulaires sont décrits dans la demande de brevet WO 93 07959 au nom de CERASIV, la demande de brevet EP 0780148 au nom de CORNING, la demande de brevet WO 00/29098 au nom d'ORELIS et les brevets EP 0778073 et EP 0778074 au nom de la demanderesse. Par exemple, la Figure 3 de la demande de brevet WO 93 07959 est une vue en coupe transversale d'un support dans lequel des canaux sont ménagés parallèlement à son axe central. Ces canaux définissent trois zones de filtration qui sont réparties de manière concentrique et séparées les unes des autres par une zone poreuse continue, nommée Z'₁ et Z'₂ dans la **Figure 1** annexée. En fonctionnement, les canaux communiquent, d'un côté, avec une chambre d'entrée pour le milieu fluide à traiter et, de l'autre côté, avec une chambre de sortie. La surface des canaux est, le plus souvent, recouverte d'au moins une couche séparatrice assurant la séparation des molécules ou des particules contenues dans le milieu fluide circulant à l'intérieur des canaux, selon un sens donné, d'une extrémité des canaux dite d'entrée à l'autre extrémité dite de sortie. Un tel élément de filtration réalise, par effet tamis, une séparation des espèces moléculaires ou particulaires du produit à traiter, dans la mesure où toutes les particules ou molécules supérieures au diamètre des pores de la zone de l'élément de filtration avec lequel elles sont en contact sont arrêtées. Durant la séparation, le transfert du fluide s'effectue à travers le support et éventuellement la ou les couches séparatrices lorsqu'elles sont présentes, et le fluide se répand dans la porosité du support pour se diriger vers la surface extérieure du support poreux. La partie du fluide à traiter ayant traversé la couche de séparation et le support poreux est appelée perméat ou filtrat et se trouve récupérée par une chambre de collecte entourant l'élément de filtration.

Le document D1 divulgue un élément de filtration cylindrique avec des couronnes de filtration qui comportent des canaux de filtration, les couronnes définissent entre les zones poreuses quelles épaisseurs augmentent en direction vers la périphérie.

Le document D1 divulgue un élément de filtration avec des zones poreuses d'épaisseur constant.

La demanderesse a constaté que de tels supports étaient soumis à de fortes sollicitations, compte tenu des pressions appliquées lors des opérations de filtration et pouvaient présenter, en certains points de leur structure, des points de fragilisation. En particulier, la demanderesse a évalué les champs de contrainte existants au sein des supports du type de ceux précédemment mentionnés et a mis en évidence que la contrainte maximale augmentait lorsque l'on se déplace du centre vers l'extérieur du support.

Aussi, la demanderesse, soucieuse d'améliorer les performances de ses éléments de filtration propose, dans le cadre de la présente invention, une nouvelle géométrie de support dans le but d'optimiser les performances mécaniques des éléments de filtration proposés dans l'art antérieur.

Dans ce contexte, la présente invention concerne un élément de filtration pour la filtration selon la revendication 1 d'un milieu fluide comportant un support poreux rigide de forme cylindrique présentant un axe central longitudinal et comprenant une pluralité de canaux pour la circulation du milieu fluide à filtrer en vue de récupérer un filtrat à la périphérie du support, lesdits canaux étant ménagés dans le support parallèlement à son axe central et définissant au moins trois zones de filtration qui sont réparties de manière concentrique et séparées les unes des autres par une zone poreuse continue, caractérisé en ce que l'épaisseur moyenne de la zone poreuse la plus proche de l'axe central est inférieure à l'épaisseur moyenne de la zone poreuse la plus proche de la périphérie du support et lorsque l'on se déplace de l'axe central du support vers sa périphérie, l'épaisseur moyenne d'une zone poreuse est soit identique à la suivante, soit inférieure.

Chaque zone poreuse est comprise entre deux zones de filtration, chaque zone de filtration comportant un canal ou une pluralité de canaux. Chaque zone poreuse continue peut notamment être définie comme la zone comprise entre l'enveloppe externe d'une zone de filtration et l'enveloppe interne de la zone de filtration voisine lorsque l'on se déplace du centre vers la périphérie du support. Pour définir une enveloppe interne, on considère que le point le plus bas (également nommé point interne ou centripète) d'un canal d'une zone de filtration est le point du canal le plus proche du centre du support poreux. Puis, on considère que l'enveloppe interne est la courbe reliant entre eux les points les plus bas de chaque canal d'une même zone de filtration, en étant tangente à la paroi de chaque canal en son point le plus bas. Selon un mode de réalisation, pour chacune des zones de filtration, les points les plus bas de chaque canal d'une même zone de filtration sont situés sur un cercle dont le centre est le centre du support, et ce cercle correspond à l'enveloppe interne.

Pour définir une enveloppe externe, on considère que le point le plus haut (également nommé point externe ou centrifuge) d'un canal d'une zone de filtration est le point du canal le plus éloigné du centre du support poreux. Puis, on considère que l'enveloppe externe est la courbe reliant les points les plus hauts de chaque canal d'une même zone de filtration, en étant tangente à la paroi de chaque canal en son point le plus haut. Selon un mode de réalisation, pour chacune des zones de filtration, les points les plus hauts de chaque canal d'une même zone de filtration sont situés sur un cercle dont le centre est le centre du support, et ce cercle correspond à l'enveloppe externe.

Par « épaisseur moyenne » d'une zone poreuse, on entend la moyenne arithmétique. Selon une variante de mise en oeuvre de l'invention, la zone poreuse peut présenter une épaisseur constante. Selon un mode de réalisation particulier, illustré notamment sur les Figures ci-après détaillées, l'enveloppe externe et l'enveloppe interne délimitant chaque zone poreuse sont définies comme étant deux cercles concentriques et chaque zone poreuse est donc d'épaisseur constante. Dans le cas du support présenté à la **Figure 3** de la demande de brevet WO 93 07959, chaque zone poreuse **Z'₁** et **Z'₂** est également délimitée par deux cercles concentriques, mais contrairement à ce qui est prévu dans le cadre de l'invention, la zone poreuse **Z'₁** présente une épaisseur plus importante que la zone poreuse **Z'₂** comme cela apparaît sur la **Figure 1****.**

Dans le cas où la zone de filtration est constituée d'un canal central unique de forme circulaire, l'enveloppe interne et l'enveloppe externe sont confondues et correspondent au contour du canal.

Les zones poreuses sont qualifiées de continues car il y a une délimitation claire entre deux zones de filtration voisines (ou successives), c'est-à-dire qu'il n'y a pas d'enchevêtrement, ni de recoupement entre deux zones de filtration voisines. En d'autres termes, un canal d'une zone de filtration ne peut se trouver, même pour partie seulement, entre deux canaux d'une zone de filtration adjacente.

Selon des modes de réalisation particuliers qui vont être détaillés dans la description qui va suivre, les éléments de filtration selon l'invention peuvent présenter l'une ou l'autre des caractéristiques ci-dessous ou une quelconque combinaison de ces caractéristiques :
- l'épaisseur moyenne entre deux zones poreuses continues voisines présentant une épaisseur moyenne différente varie d'un facteur de 1,01 à 3,00, de préférence de 1,10 à 1,70,
- le rapport entre l'épaisseur moyenne de la zone poreuse la plus proche de la périphérie du support sur l'épaisseur moyenne de la zone poreuse la plus proche de l'axe central appartient à la gamme 1,1 à 6, de préférence à la gamme 1,2 à 2,5. En fonction du nombre de zones poreuses, les variations d'épaisseur entre deux zones poreuses successives seront alors choisies pour atteindre un tel rapport.
- l'épaisseur moyenne de la zone périphérique séparant la surface externe du support et la zone de filtration la plus proche de la surface externe du support est plus importante que l'épaisseur moyenne de la zone poreuse séparant la zone de filtration la plus proche de la surface externe du support et la zone de filtration voisine,
- les canaux d'une même zone de filtration à plusieurs canaux sont tous identiques,
- le support comporte un canal central, par exemple de forme circulaire, définissant à lui seul une zone de filtration,
- le nombre de canaux présents dans chaque zone de filtration augmente lorsque l'on se déplace du centre vers la périphérie du support,
- le support présente une section circulaire ou polygonale,
- la surface des canaux est recouverte par au moins une couche inorganique de filtration,
- les zones de filtration consistent exclusivement en un canal circulaire central définissant à lui seul une zone de filtration et en une série de zones de filtration correspondant, chacune, à une couronne de filtration qui comporte plusieurs canaux et dans laquelle les canaux sont séparés par des cloisons poreuses permettant le passage du perméat, les couronnes de filtration étant réparties de manière concentrique au canal central,
- dans le cas où des couronnes de filtration sont présentes, ces dernières peuvent présenter l'une ou l'autre des caractéristiques ci-dessous ou une quelconque combinaison de ces caractéristiques :
   ∘ la largeur de chaque cloison de passage est constante sur toute sa longueur,
   ∘ dans chaque couronne de filtration, les canaux sont de section circulaire ou non circulaire, et, par exemple de section trapézoïdale,
   ∘ les différents canaux des couronnes de filtration présentent un axe de symétrie radial par rapport au centre du support,
   ∘ dans chaque couronne de filtration, les canaux sont tous identiques,
   ∘ le support comporte au moins quatre couronnes de filtration.

Diverses autres caractéristiques ressortent de la description faite ci-dessous en référence aux dessins annexés qui montrent, à titre d'exemples non limitatifs, des formes de réalisation des supports selon l'invention.
La **Figure 1** est une vue en coupe transversale d'un élément de filtration selon l'art antérieur WO 93 07959.
La **Figure 2A** est une vue en coupe transversale d'un exemple de réalisation d'un élément de filtration conforme à l'invention.
La **Figure 2B** est une vue en coupe transversale d'un élément de filtration, donné à titre comparatif, analogue à celui de la **Figure 2A****,** mais dans lequel toutes les zones poreuses présentent une épaisseur constante.
La **Figure 3** est une vue en coupe transversale d'un autre exemple de réalisation d'un élément de filtration conforme à l'invention.

Dans l'ensemble de la description, les notions d'épaisseur, de largeur, de section et de déplacement au sein du support s'entendent sur une section droite transversale du support. Sur une section droite transversale du support, on nommera indifféremment l'axe du support et le centre du support.

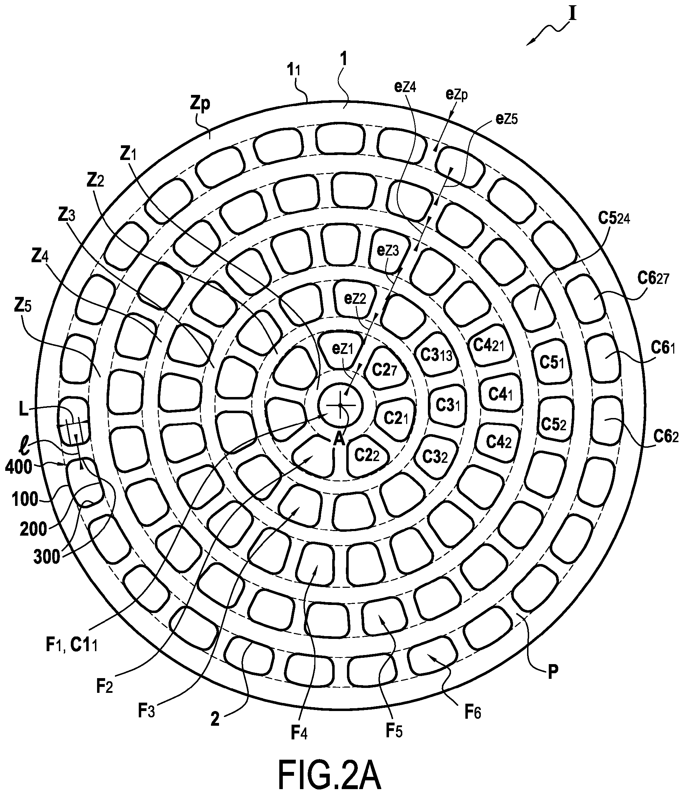

Tel que cela ressort de la **Figure 2A****,** l'élément inorganique de filtration **I** est de forme adaptée pour assurer la séparation ou la filtration de molécules ou de particules contenues dans un milieu fluide, de préférence liquide, de nature diverse comportant une phase solide ou non. L'élément de filtration **I** comporte un support poreux rigide **1** constitué dans une matière dont la résistance au transfert est adaptée à la séparation à effectuer. En particulier, le support **1** est réalisé à partir d'un ou plusieurs matériaux inorganiques, tels que des oxydes métalliques (dioxyde de titane, alumine, zircone notamment), du carbone, du carbure ou nitrure de silicium ou des métaux. Le support **I** est réalisé sous une forme allongée ou d'un conduit s'étendant selon un axe central longitudinal **A**. Le support poreux **1** possède généralement un diamètre moyen équivalent de pores compris entre 2 et 12 µm. Le support **1** possède une section droite transversale qui peut être de différente forme, par exemple hexagonale ou, comme dans les modes de réalisation illustrés sur les Figures, circulaire. Le support **1** offre ainsi une surface extérieure **1₁** cylindrique.

Le support **1** est aménagé pour comporter une pluralité de canaux **C₁₁**, **C₂₁, C**_{**22**...}, **C₂₇ C₃₁**, **C₃₂** ..., **C₃₁₃**... (nommés génériquement **Cᵢⱼ**) réalisés parallèlement à l'axe **A** du support. Les canaux **Cᵢⱼ** présentent chacun une surface **2** qui peut être recouverte par au moins une couche séparatrice non représentée, destinée à être en contact avec le milieu fluide à traiter circulant à l'intérieur des canaux. La nature de la ou des couches séparatrices est choisie en fonction du pouvoir de séparation ou de filtration à obtenir et forme avec le support une liaison intime, de façon que la pression provenant du milieu liquide soit transmise au support poreux **1**. Cette ou ces couches peuvent être déposées à partir, par exemple, de suspensions contenant au moins un oxyde métallique du type dioxyde de titane, alumine, zircone notamment, éventuellement en mélange et classiquement utilisé dans la production des éléments de filtration minéraux. Cette ou ces couches sont soumises, après séchage, à une opération de frittage qui permet de les consolider et de les lier entre-elles ainsi qu'au support poreux **1**.

Conformément à l'invention, le support **1** comporte au moins trois zones de filtration **F₁**, **F₂**, **F₃** ...**Fₙ** (nommée génériquement **Fᵢ**) qui sont réparties de manière concentrique. Deux zones de filtration voisines (c'est-à-dire successives) sont séparées par une zone poreuse continue **Z₁** à **Zₙ₋₁**. Chaque zone poreuse **Zₗ** vient donc s'intercaler entre deux zones de filtration **Fᵢ** voisines. Pour la suite de la description, il est considéré que les zones de filtration occupent des rangs différents qui augmentent en direction de la périphérie du support. Ainsi, pour deux zones poreuses considérées, la zone poreuse la plus proche de la périphérie est considérée d'un rang supérieur par rapport à une zone poreuse plus proche du centre et considérée comme une zone poreuse d'un rang inférieur.

Selon une caractéristique essentielle de l'invention, l'épaisseur moyenne de la zone poreuse **Zₙ₋₁** est supérieure à l'épaisseur moyenne de la zone poreuse **Z₁**. On a donc pour certaines zones poreuses au moins, une augmentation de l'épaisseur moyenne, lorsque l'on passe d'une zone poreuse à la suivante, lorsque l'on se déplace vers la périphérie du support 1, c'est-à-dire vers sa surface extérieure **1₁**. En d'autres termes, l'épaisseur moyenne d'une zone poreuse d'un rang supérieur est identique ou supérieure à l'épaisseur moyenne d'une zone poreuse d'un rang inférieur voisin, l'épaisseur moyenne d'au moins une zone poreuse d'un rang inférieur étant inférieure à l'épaisseur moyenne d'au moins une zone poreuse d'un rang supérieur.

Dans l'exemple illustré à la **Figure 2A**, le support comporte six zones de filtration **F₁** à **F₆**. La première zone de filtration **F₁** est constituée d'un seul et unique canal central **C₁₁**, ce qui permet notamment d'éviter une accumulation de matière au centre du support. Dans l'exemple illustré, le canal central **C₁₁** est de forme circulaire, mais une forme du type octogonale ou autre, pourrait également être prévue. La mise en oeuvre d'un canal central unique par rapport à un ensemble de canaux disposés comme des pétales à partir de l'axe **A** central du support **1** comme décrit dans la demande de brevet WO 00/29098 au nom d'ORELIS permet de contribuer à l'obtention d'une bonne résistance mécanique. En effet, la présence d'un canal central unique permet d'éviter la présence de matière poreuse au centre du support et renforce ainsi la résistance mécanique de ce dernier.

Les autres zones de filtration **F₂** à **F₆** sont chacune composées d'une série de canaux. Chacune de ces zones de filtration correspond à une couronne de filtration dans laquelle les canaux sont séparés par des cloisons de passage **P** pour le filtrat. Ces cloisons de passage **P** permettent au filtrat de cheminer à l'intérieur du support d'une zone poreuse à l'autre, jusqu'à la zone périphérique **Zp**, également poreuse, pour déboucher sur la surface extérieure **1₁** du support **1**.

Ces couronnes de filtration **F₂** à **F₆** sont réparties comme suit lorsque l'on se déplace de l'axe central **A vers** la périphérie du support :
- la deuxième zone de filtration **F₂** est constituée d'une couronne de 7 canaux **C₂₁** à **C₂₇** identiques et de forme trapézoïdale,
- la troisième zone de filtration **F₃** est constituée d'une couronne de 13 canaux **C₃₁** à **C₃₁₃** identiques et de forme trapézoïdale,
- la quatrième zone de filtration **F₄** est constituée d'une couronne de 21 canaux **C₄₁** à **C₄₂₁** identiques et de forme trapézoïdale,
- la cinquième zone de filtration **F₅** est constituée d'une couronne de 24 canaux **C₅₁** à **C₅₂₄** identiques et de forme trapézoïdale, et
- la sixième zone de filtration **F₆** est constituée d'une couronne de 27 canaux **C₆₁** à **C₆₂₇** identiques et de forme trapézoïdale.

Le nombre de canaux présents dans chaque zone de filtration augmente donc lorsque l'on se déplace du centre vers la périphérie du support. Ces couronnes de filtration **F₂** à **F₆** sont réparties de manière concentrique par rapport au canal central. Les barycentres des canaux **C₂₁**, **C₂₂**.... **C₂₇** de la deuxième zone de filtration **F₂** sont situés sur un cercle coaxial à l'axe central **A**, ce cercle coaxial présentant un diamètre inférieur par rapport au cercle coaxial sur lequel sont situés les barycentres des canaux **C₃₁**, **C₃₂**.... **C₃₁₃** de la troisième zone de filtration **F₃** et ainsi de suite.

La dernière zone de filtration **F₆** est séparée de la surface externe **1₁** du support **1** par une zone périphérique **Zp**. Cette zone périphérique **Zp** peut être définie comme la zone existant entre la surface externe **1₁** du support **1** et la courbe reliant les points externes (également nommés centrifuges ou les plus hauts) de chaque canal de la dernière zone de filtration **F₆**. Cette courbe peut être définie comme précédemment, à savoir tangente à la paroi de chaque canal au point le plus haut de sa paroi, ou bien lorsqu'une telle courbe est sécante avec le contour externe **1₁** du support **1**, comme la courbe qui passe par les points les plus hauts des canaux de la zone de filtration la plus proche de la périphérie du support, en étant homothétique à la surface externe **1₁** du support.

Dans l'exemple illustré, pour chacune des zones de filtration, les points centripètes de chaque canal d'une même zone de filtration sont situés sur un cercle dont le centre est le centre du support, ce cercle correspondant à l'enveloppe interne de la zone de filtration concernée. De même, pour chacune des zones de filtration, les points centrifuges de chaque canal d'une même zone de filtration sont situés sur un cercle dont le centre est le centre du support, ce cercle correspondant à l'enveloppe externe de la zone de filtration concernée. Aussi, l'enveloppe externe et l'enveloppe interne délimitant chaque zone poreuse sont deux cercles concentriques et chaque zone poreuse est donc d'épaisseur constante. La distance (correspondant à l'épaisseur e_{z1} de la zone poreuse **Z₁**) séparant le canal central **C₁₁** de la zone de filtration voisine, à savoir la deuxième zone de filtration **F₂**, est moins importante que la distance (correspondant à l'épaisseur e_{z5} de la zone poreuse **Z₅**) séparant la dernière zone de filtration **F₆** de la zone de filtration voisine en direction du centre du support, à savoir la cinquième zone de filtration **F₅**. Cette augmentation de l'épaisseur d'au moins certaines des zones poreuses lorsqu'on s'éloigne de l'axe central du support est réalisée, pour minimiser l'effet de la pression exercée par le retentat, ou par les accidents hydrauliques engendrés par le fonctionnement de l'installation tel que les coups de bélier. Pour cela, dans l'exemple illustré, à partir de la troisième zone poreuse **Z₃**, si l'on considère deux zones poreuses successives, le rapport entre l'épaisseur moyenne de la zone poreuse la plus extérieure sur l'épaisseur moyenne de la zone poreuse la plus proche, lorsque l'on se déplace vers le centre du support, est toujours supérieur à 1. Dans l'exemple illustré **Figure 2A**, les zones poreuses **Z₁**, **Z₂** et **Z₃** présentent une épaisseur identique. A partir de la zone poreuse **Z₃**, l'épaisseur moyenne des zones de filtration augmente lorsque l'on se déplace vers la périphérie **1₁** du support. Les rapports d'épaisseur e_{Z4}/e_{Z3} et e_{Z5}/e_{Z4} sont compris entre 1,14 et 1,17.

De manière à encore renforcer la résistance mécanique de l'élément de filtration, dans l'exemple illustré sur la **Figure 2A****,** la zone périphérique **Zp** séparant la dernière couronne de filtration **F₆** de la surface externe **1₁** du support **1** est également plus importante que l'épaisseur moyenne de la zone poreuse **Z₅**. Néanmoins, selon une variante non préférée, il pourrait être prévu que cette zone poreuse périphérique **Zp** présente une épaisseur identique à l'épaisseur de la zone poreuse **Z₅**. Dans l'exemple illustré **Figure 2A****,** l'épaisseur moyenne de la zone périphérique **Zp** correspond à environ 1,13 * l'épaisseur moyenne de la zone poreuse **Z₅**.

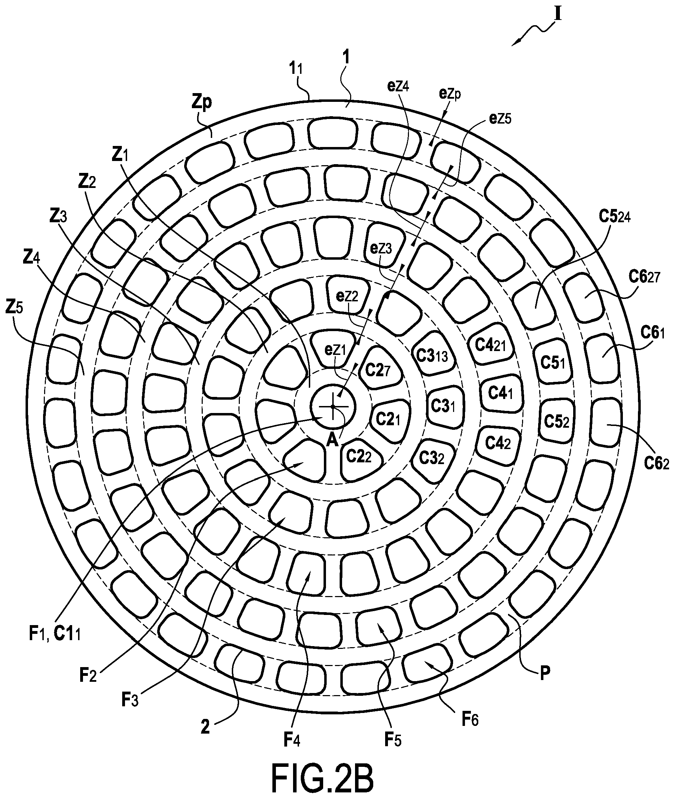

Afin de mettre en évidence l'apport de l'invention, une étude a été réalisée pour évaluer les champs de contrainte existant au sein du support, lorsqu'une sollicitation correspondant à une pression de 100 bars est imposée dans chacun des canaux. Un support conforme à la **Figure 2A** a été comparé au support conforme à la **Figure 2B** réalisé à titre de comparaison et dans lequel les épaisseurs moyennes des zones poreuses **Z₁** à **Z₅** sont identiques et sont égales à 0,7mm.

Les résultats obtenus avec le logiciel Abaqus sont résumés ci-dessous dans les **TABLEAUX 1** et **2.**

**TABLEAU 1 : Support conforme à l'invention selon la Figure 2A**

| Zone poreuse (du centre vers la périphérie) | Epaisseur (mm) | Contrainte moyenne (Mpa) |
|---|---|---|
| 1 | 0,6 | 11,9 |
| 2 | 0,6 | 11,7 |
| 3 | 0,6 | 11,7 |
| 4 | 0,7 | 10,8 |
| 5 | 0,8 | 11,7 |
| P | 0,9 | 10,06 |

**TABLEAU 2 : Support comparatif selon la Figure 2B**

| Zone poreuse (du centre vers la périphérie) | Contrainte moyenne (Mpa) |
|---|---|
| 1 | 14 |
| 2 | 14,5 |
| 3 | 15,7 |
| 4 | 17 |
| 5 | 18 |
| P | 19,9 |

Ces résultats mettent bien en évidence que la nouvelle répartition d'épaisseur conforme à l'invention permet de diminuer significativement la valeur de contrainte moyenne, et de rendre plus homogène la répartition de ces contraintes.

De plus la valeur de la contrainte maximale calculée pour la **Figure 2A** est de 58,8 Mpa, contre 67,4 Mpa pour la **Figure 2B**. La nouvelle répartition d'épaisseur conforme à l'invention réduit ainsi significativement les zones locales de fragilité.

La **Figure 3** illustre un autre exemple de réalisation de l'invention dans lequel le support **1** comporte 5 zones de filtration **F**. Ces zones de filtration sont réparties comme suit lorsque l'on se déplace de l'axe central **A** vers la périphérie **1₁** du support **1**:
- la première zone de filtration **F₁** est constituée d'un seul et unique canal central **C₁₁** de forme cylindrique,
- la deuxième zone de filtration **F₂** est constituée d'une couronne de 6 canaux **C₂₁** à **C₂₆** identiques et de forme trapézoïdale,
- la troisième zone de filtration **F₃** est constituée d'une couronne de 10 canaux **C₃₁** à **C₃₁₀** identiques et de forme trapézoïdale,
- la quatrième zone de filtration **F₄** est constituée d'une couronne de 15 canaux **C₄₁** à **C₄₁₅** identiques et de forme trapézoïdale, et
- la cinquième zone de filtration **F₅** est constituée d'une couronne de 20 canaux **C₅₁** à **C₅₂₀** identiques et de forme trapézoïdale.

Selon la caractéristique essentielle de l'invention, la distance (correspondant à l'épaisseur e_{Z1} de la zone poreuse **Z₁**) séparant le canal central **C₁₁** de la zone de filtration voisine, à savoir la deuxième zone de filtration **F₂**, est moins importante que la distance (correspondant à l'épaisseur e_{z4} de la zone poreuse **Z₄**) séparant la dernière zone de filtration **F₅** de la zone de filtration voisine en direction de l'axe central **A** du support, à savoir la quatrième zone de filtration **F₄**, et ainsi de suite jusqu'à la deuxième zone de filtration **F₂**. Les zones poreuses **Z₁** et **Z₂** ont une épaisseur identique (e_{z1} = e_{z2}) alors que les épaisseurs des zones poreuses augmentent de la zone **Z₂** à la zone **Z₄**, du centre vers la périphérie du support (e_{z2}<e_{z3}<e_{z4}).

Sur l'exemple illustré **Figure 3**, comme dans l'exemple illustré sur la **Figure 2A****,** la zone périphérique **Zp** séparant la dernière couronne de filtration **F₅** de la surface externe **1₁** du support **1** est également plus importante que l'épaisseur moyenne de la dernière zone poreuse **Z₄**.

Dans le cas où le support selon l'invention comporte au moins 4 zones de filtration **F**, ce qui est le cas dans les exemples présentés sur les **Figures 2A** et **3**, il peut être choisi d'appliquer le même facteur de variation d'épaisseur d'une zone poreuse à l'autre lorsque l'on se déplace de l'axe central du support vers sa périphérie, ou bien d'appliquer un facteur différent.

Dans le cadre de l'invention, comme illustré sur les Figures **2A** et **3**, les zones de filtration peuvent correspondre exclusivement à un canal central unique **C₁₁** et à des couronnes de canaux telles que définie dans le cadre de l'invention et réparties de manière concentrique par rapport à l'axe central du support.

De même, dans le cadre de l'invention, comme illustré sur les Figures **2A** et **3**, les différents canaux des couronnes de filtration peuvent présenter un axe de symétrie radial par rapport au centre du support par souci d'optimisation de la surface filtrante, mais d'autres configuration pourraient également être prévues.

Par ailleurs, dans le cadre de l'invention, comme illustré sur les Figures **2A** et **3**, lorsque le support comporte plus de trois zones poreuses, certaines des zones poreuses présentent une épaisseur différente. Les zones poreuses **Z** les plus proches du centre du support peuvent présenter une épaisseur identique, alors que seules la, les deux ou les trois dernières zones poreuses, en fonction du nombre de zones poreuses, présentent une épaisseur croissante, lorsque l'on se déplace du centre **A** vers la périphérie du support **1**. Néanmoins, il pourrait être prévu que toutes les zones poreuses soient d'épaisseur moyenne différente avec une croissance du centre **A** vers la périphérie du support **1**.

Dans le cadre de l'invention, comme illustré sur les Figures **2A****,** **2B** et **3**, les canaux des différentes couronnes sont disposés à intervalles réguliers et identiques sur leur couronne respective, mais d'autres configurations pourraient également être prévues.

Selon une autre caractéristique illustrée sur les différents exemples de mise en oeuvre de l'invention, toutes les cloisons de passage **P** (également nommées couloirs de passage et de liaison) présentent un axe de symétrie qui passe par le centre du support.

Par ailleurs, les cloisons de passage **P** ont, au sein d'une même couronne, des épaisseurs **ℓ** sensiblement identiques. Comme illustré sur les Figures **2A** et **3**, il est prévu que la largeur **ℓ** des couloirs de passage **P** aménagés entre deux canaux voisins d'une couronne soit constant sur toute leur longueur **L.** Bien entendu, la largeur **ℓ** des couloirs de passage **P** s'entend de la distance séparant les deux parois latérales **300** des deux canaux qui le délimitent. Cette largeur **ℓ** est également identique d'une couronne de filtration à l'autre. En effet, la demanderesse a constaté que les variations de largeur des couloirs d'acheminement du perméat, telles que décrites dans les demandes de brevet WO 93 07959 au nom de CERASIV et EP 0780148 au nom de CORNING, font apparaître nécessairement des points de faible largeur qui constituent systématiquement des points de faiblesse en regard des contraintes mécaniques subies par l'élément de filtration. La mise en oeuvre de couloirs d'acheminement du perméat vers la périphérie de largeur **ℓ** constante permet d'optimiser les caractéristiques mécaniques de l'élément de filtration. En effet, si l'on compare un couloir d'acheminement de largeur **ℓ** constante et un couloir d'acheminement dont la largeur augmente du centre vers la périphérie du support, tout en maintenant constante la section et le nombre des canaux qui définissent ces couloirs, la plus faible largeur du couloir à largeur variable est inférieure à la largeur du couloir à largeur constante et ce point de largeur plus faible devient ainsi un point de faiblesse mécanique. Le choix de couloir de passage d'épaisseur **ℓ** constante permet également d'obtenir un meilleur rendement de fabrication, car les pressions d'extrusion sont plus homogènes.

La largeur **ℓ** d'un couloir de passage peut être définie de la façon suivante. Au sein de chaque couronne, les canaux sont de sections droites non circulaires. Dans les exemples illustrés, les canaux des couronnes sont de forme trapézoïdale. Ils possèdent une paroi **100** faisant face à la périphérie **1₁** du support (dite paroi externe), une paroi **200** faisant face au centre **A** du support (dite paroi interne), et deux parois latérales **300** reliant la paroi interne **200** et la paroi externe **100.** Le plus souvent, les parois latérales **300** sont reliées aux parois interne **200** et externe **100** par des congés de raccordement. Dans certains cas, la paroi interne pourra être remplacée par un congé de raccordement **400** reliant les deux parois latérales **300.** Une paroi radiale **300** est constituée par un segment de droite **L** relié par des congés de raccordement **400** aux parois interne **200** et externe **100** du canal qu'elle délimite. La largeur **ℓ** d'un couloir de passage s'entend de la largeur **ℓ** du couloir sur la partie correspondant à ces segments de droites **L** qui est située entre les congés de raccordement **400.**

Par ailleurs, on notera, que lorsque tous les canaux sont identiques au sein d'une même couronne, ce qui est le cas sur les Figures **2A** et **3**, ils sont, de préférence, tous positionnés de manière identique sur la couronne, pour des raisons de symétrie.

## Revendications

1. Elément de filtration (**I**) pour la filtration d'un milieu fluide comportant un support (**1**) poreux rigide de forme cylindrique présentant un axe central longitudinal (**A**) et comprenant une pluralité de canaux (**C₁₁**, **C₂₁, C₂₂**... **C₃₁**, **C₃₂** ...**Cₙ₁**, **Cₙ₂**...) pour la circulation du milieu fluide à filtrer en vue de récupérer un filtrat à la périphérie du support (**1**), lesdits canaux (**C₁₁**, **C₂₁**, **C₂₂**... **C₃₁**, **C₃₂** ...**Cₙ₁**, **Cₙ₂**) étant ménagés dans le support (**1**) parallèlement à son axe central (**A**) et définissant au moins trois zones de filtration (**F₁**, **F₂** ...**Fₙ**) dont au moins deux des zones de filtration (**F₂**, **F₃** ...**Fₙ**) correspondent chacune à une couronne de filtration comportant plusieurs canaux et dans laquelle les canaux sont séparés par des cloisons (P) de passage du filtrat, les couronnes de filtration (**F₂**, **F₃** ...**Fₙ**) étant réparties sur des cercles concentriques, les au moins trois zones de filtration (**F₁**, **F₂** ...**Fₙ**) étant réparties de manière concentrique et séparées les unes des autres par une zone poreuse continue (**Z₁**, **Z₂** ...**Zₙ₋₁**) correspondant à la zone comprise entre l'enveloppe externe d'une zone de filtration et l'enveloppe interne de la zone de filtration voisine prise en direction de la périphérie du support (**1**), l'épaisseur moyenne de la zone poreuse (**Z₁**) la plus proche de l'axe central (**A**) étant inférieure à l'épaisseur moyenne de la zone poreuse (**Zₙ₋₁**) la plus proche de la périphérie du support (**1**) et, lorsque l'on se déplace de l'axe central (**A**) du support vers sa périphérie, l'épaisseur moyenne d'une zone poreuse étant soit identique à la suivante, soit inférieure, étant entendu que :
- pour chacune des zones de filtration, les points les plus proches du centre du support de chaque canal d'une même zone de filtration sont situés sur un cercle dont le centre est le centre du support, et ce cercle définit l'enveloppe interne de ladite zone de filtration,
- pour chacune des zones de filtration, les points les plus éloignés du centre du support de chaque canal d'une même zone de filtration sont situés sur un cercle dont le centre est le centre du support, et ce cercle définit l'enveloppe externe de ladite zone de filtration,
- chaque zone poreuse est délimitée par deux cercles concentriques et est d'épaisseur constante, **caractérisé en ce que** les largeurs (**ℓ**) des cloisons de passage (**P**) sont égales au sein d'une même couronne et égales d'une couronne à l'autre.

2. Elément de filtration (**I**) selon la revendication 1, **caractérisé en ce que** l'épaisseur entre deux zones poreuses continues voisines (**Z₁** et **Z₂** ...**Zₙ₋₂** et **Zₙ₋₁**) présentant une épaisseur moyenne différente varie d'un facteur de 1,01 à 3,00, de préférence de 1,10 à 1,70 lorsque l'on se déplace de l'axe central longitudinal (**A**) vers la périphérie du support (**1**).

3. Elément de filtration (**I**) selon l'une des revendications précédentes **caractérisé en ce que** le rapport entre l'épaisseur moyenne de la zone poreuse la plus proche de la périphérie du support sur l'épaisseur moyenne de la zone poreuse la plus proche de l'axe central appartient à la gamme 1,1 à 6, de préférence à la gamme 1,2 à 2,5.

4. Elément de filtration (**I**) selon l'une des revendications précédentes **caractérisé en ce que** l'épaisseur moyenne de la zone périphérique (**Zp**) séparant la surface externe (**1₁**) du support (**1**) et la zone de filtration (**Fₙ**) la plus proche de la surface externe du support (**1**) est plus importante que l'épaisseur moyenne de la zone poreuse (**Zₙ₋₁**) séparant la zone de filtration (**Fₙ**) la plus proche de la surface externe du support (**1**) et la zone de filtration voisine (**Fₙ₋₁**).

5. Elément de filtration (**I**) selon l'une des revendications précédentes **caractérisé en ce que** les canaux (**Cₙ₁**, **Cₙ₂**...) d'une même zone de filtration à plusieurs canaux sont tous identiques.

6. Elément de filtration (**I**) selon l'une des revendications précédentes **caractérisé en ce qu'**il comporte un canal central (**C₁₁**), par exemple de forme circulaire, définissant à lui seul une zone de filtration (**F₁**).

7. Elément de filtration (**I**) selon l'une des revendications précédentes **caractérisé en ce que** les zones de filtration consistent exclusivement en un canal central (**C₁₁**) circulaire définissant à lui seul une zone de filtration (**F₁**) et une série de zones de filtration (**F₂**, ...**Fₙ**) correspondant, chacune, à une couronne de filtration qui comportent plusieurs canaux et dans laquelle les canaux sont séparés par des cloisons de passage (**P**) pour le filtrat, les couronnes de filtration étant réparties de manière concentrique au canal central (**C₁₁**).

8. Elément de filtration (**I**) selon l'une des revendications précédentes, **caractérisé en ce que** la largeur (**ℓ**) de chaque cloison de passage (**P**) sur une section droite transversale du support est constante sur toute sa longueur.

9. Elément de filtration (**I**) selon l'une des revendications précédentes, **caractérisé en ce que**, dans chaque couronne de filtration (**F₂**, **F₃** ...**Fₙ**), les canaux sont de section circulaire.

10. Elément de filtration (**I**) selon l'une des revendications 1 à 8, **caractérisé en ce que** dans chaque couronne de filtration (**F₂**, **F₃** ...**Fₙ**), les canaux sont de section non circulaire, et, par exemple de section trapézoïdale.

11. Elément de filtration (**I**) selon l'une des revendications précédentes, **caractérisé en ce que** les différents canaux des couronnes de filtration présentent un axe de symétrie radial par rapport au centre du support.

12. Elément de filtration (**I**) selon l'une des revendications précédentes **caractérisé en ce qu'**il comporte au moins quatre couronnes de filtration (**F₂**, **F₃**, **F₄**, ...**Fₙ**).

13. Elément de filtration (**I**) selon l'une des revendications précédentes **caractérisé en ce que** le nombre de canaux présents dans chaque zone de filtration augmente lorsque l'on se déplace du centre (**A**) vers la périphérie (**1₁**) du support (**1**).

14. Elément de filtration (**I**) selon l'une des revendications précédentes **caractérisé en ce que** le support (**1**) présente une section circulaire ou polygonale.

15. Elément de filtration (**I**) selon l'une des revendications précédentes **caractérisé en ce que** la surface (**2**) des canaux (**C₁₁**, **C₂₁**, **C₂₂**... **C₃₁**, **C₃₂** ...**Cₙ₁**, **Cₙ₂**...) est recouverte par au moins une couche inorganique de filtration.

## Patentansprüche

1. Filterelement (I) zum Filtern eines flüssigen Mediums, umfassend einen starren porösen Träger (1) von zylindrischer Form, der eine Längsmittelachse (A) aufweist und mehrere Kanäle (C11, C21, C22 ... C31, C32 ... Cn1, Cn2 ...) zur Zirkulation des zu filternden flüssigen Mediums aufweist, um ein Filtrat an der Peripherie des Trägers (1) zurückzugewinnen, wobei die Kanäle (C11, C21, C22 ... C31, C32 ... Cn1, Cn2) in dem Träger (1) parallel zu seiner Mittelachse (A) ausgebildet sind und mindestens drei Filterbereiche (F1, F2...Fn) definieren, wovon mindestens zwei Filterbereiche (F2, F3...Fn) jeweils einem Filterkranz entsprechen, der mehrere Kanäle aufweist und in dem die Kanäle durch Trennwände (P) zum Durchtritt des Filtrats getrennt sind, wobei die Filterkränze (F2, F3...Fn) über konzentrische Kreise verteilt sind, wobei die mindestens drei Filterbereiche (F1, F2...Fn) konzentrisch verteilt und voneinander durch einen kontinuierlichen porösen Bereich (Z1, Z2 ... Zn-1) getrennt sind, der dem Bereich entspricht, der zwischen der äußeren Umhüllung eines Filterbereichs und der inneren Umhüllung des benachbarten Filterbereichs, in Richtung der Peripherie des Trägers (1) genommen, liegt, wobei die mittlere Dicke des porösen Bereichs (Z1), der der Mittelachse (A) am nächsten ist, geringer ist als die mittlere Dicke des porösen Bereichs (Zn-t), der der Peripherie des Trägers (1) am nächsten ist, und wobei, beim Bewegen von der Mittelachse (A) des Trägers in Richtung seiner Peripherie, die mittlere Dicke eines porösen Bereichs entweder mit dem nächsten identisch oder niedriger als dieser ist, vorausgesetzt, dass:
- für jeden der Filterbereiche die Punkte, die der Mitte des Trägers jedes Kanals eines gleichen Filterbereichs am nächsten liegen, auf einem Kreis angeordnet sind, dessen Mitte die Mitte des Trägers ist, und dieser Kreis die innere Umhüllung von diesem Filterbereich definiert,
- für jeden der Filterbereiche die Punkte, die von der Mitte des Trägers jedes Kanals eines gleichen Filterkanals am entferntesten sind, auf einem Kreis angeordnet sind, dessen Mitte die Mitte des Trägers ist, und dieser Kreis die äußere Umhüllung von diesem Filterbereich definiert,
- jeder poröse Bereich durch zwei konzentrische Kreise begrenzt ist und von konstanter Dicke ist,
**dadurch gekennzeichnet, dass** die Breiten (**ℓ**) der Trennwände zum Durchtritt (P) innerhalb eines gleichen Kranzes gleich sind und von einem Kranz zum anderen gleich sind.

2. Filterelement (I) gemäß Anspruch 1, **dadurch gekennzeichnet, dass** die Dicke zwischen zwei benachbarten kontinuierlichen porösen Bereichen (Z1 und Z2 ... Zn-2 und Zn-1), die eine unterschiedliche mittlere Dicke aufweisen, um einen Faktor von 1,01 bis 3,00, vorzugsweise von 1,10 bis 1,70, beim Bewegen von der Längsmittelachse (A) des Trägers (1) in Richtung seiner Peripherie variiert.

3. Filterelement (I) gemäß einem der vorhergehenden Ansprüche, **dadurch gekennzeichnet, dass** das Verhältnis zwischen der mittleren Dicke des porösen Bereichs, der der Peripherie des Trägers am nächsten liegt, zu der mittleren Dicke des porösen Bereichs, der der Mittelachse am nächsten liegt, zu dem Bereich von 1,1 bis 6, vorzugsweise zu dem Bereich von 1,2 bis 2,5, gehört.

4. Filterelement (I) gemäß einem der vorhergehenden Ansprüche, **dadurch gekennzeichnet, dass** die mittlere Dicke des peripheren Bereichs (Zp), der die äußere Oberfläche (11) des Trägers (1) und den Filterbereich (Fn) trennt, der der äußeren Oberfläche des Trägers (1) am nächsten liegt, größer als die mittlere Dicke des porösen Bereichs (Zn-1) ist, der den Filterbereich (Fn), der der äußeren Oberfläche des Trägers (1) am nächsten liegt, und den benachbarten Filterbereich (Fn-1) trennt.

5. Filterelement (I) gemäß einem der vorhergehenden Ansprüche, **dadurch gekennzeichnet, dass** die Kanäle (Cn1, Cn2...) eines gleichen Filterbereichs mit mehreren Kanälen alle identisch sind.

6. Filterelement (I) gemäß einem der vorhergehenden Ansprüche, **dadurch gekennzeichnet, dass** es einen zentralen Kanal (C11), beispielsweise von kreisförmiger Form, aufweist, der selbst einen einzigen Filterbereich (F1) definiert.

7. Filterelement (I) gemäß einem der vorhergehenden Ansprüche, **dadurch gekennzeichnet, dass** die Filterbereiche ausschließlich aus einem zentralen kreisförmigen Kanal (C11), der selbst einen Filterbereich (F1) definiert, und einer Reihe von Filterbereichen (F2, ... Fn) bestehen, die jeweils einem Filterkranz entsprechen, der mehrere Kanäle aufweist und in dem die Kanäle durch Trennwände zum Durchtritt (P) für das Filtrat getrennt sind, wobei die Filterkränze konzentrisch zu dem zentralen Kanal (C11) verteilt sind.

8. Filterelement (I) gemäß einem der vorhergehenden Ansprüche, **dadurch gekennzeichnet, dass** die Breite (ℓ) von jeder Trennwand zum Durchtritt (P) auf einem geraden Querschnitt des Trägers über ihre gesamte Länge konstant ist.

9. Filterelement (I) gemäß einem der vorhergehenden Ansprüche, **dadurch gekennzeichnet, dass** die Kanäle in jedem Filterkranz (F2, F3 ... Fn) von kreisförmigem Querschnitt sind.

10. Filterelement (I) gemäß einem der Ansprüche 1 bis 8, **dadurch gekennzeichnet, dass** die Kanäle in jedem Filterkranz (F2, F3 ... Fn) von nicht kreisförmigem Querschnitt sind und beispielsweise von trapezförmigem Querschnitt sind.

11. Filterelement (I) gemäß einem der vorhergehenden Ansprüche, **dadurch gekennzeichnet, dass** die verschiedenen Kanäle der Filterkränze eine Symmetrieachse aufweisen, die radial in Bezug auf die Mitte des Trägers ist.

12. Filterelement (I) gemäß einem der vorhergehenden Ansprüche, **dadurch gekennzeichnet, dass** es mindestens vier Filterkränze (F2, F3, F4 ... Fn) aufweist.

13. Filterelement (I) gemäß einem der vorhergehenden Ansprüche, **dadurch gekennzeichnet, dass** die Anzahl der Kanäle, die in jedem Filterbereich vorhanden sind, beim Bewegen von der Mittelachse (A) in Richtung der Peripherie (11) des Trägers (1) zunimmt.

14. Filterelement (I) gemäß einem der vorhergehenden Ansprüche, **dadurch gekennzeichnet, dass** der Träger (1) einen kreisförmigen oder polygonalen Querschnitt aufweist.

15. Filterelement (I) gemäß einem der vorhergehenden Ansprüche, **dadurch gekennzeichnet, dass** die Oberfläche (2) der Kanäle (C11, C21, C22 ... C31, C32 ... Cn1, Cn2 ...) durch mindestens eine anorganische Filterschicht bedeckt ist.

## Claims

1. Filtering element (**I**) for filtering a fluid medium, comprising a rigid porous support (**1**) of cylindrical shape having a longitudinal central axis (**A**) and comprising a plurality of channels (**C₁₁**, **C₂₁, C₂₂**... **C₃₁**, **C₃₂** ... **Cₙ₁**, **Cₙ₂**...) for the circulation of the fluid medium to be filtered in order to collect a filtrate on the periphery of the support (**1**), said channels (**C₁₁**, **C₂₁, C₂₂**... **C₃₁**, **C₃₂** ...**Cₙ₁**, **Cₙ₂**) being arranged in the support (**1**) parallel to the central axis (**A**) thereof and defining at least three filtering zones (**F₁**, **F₂** ...**Fₙ**), at least two of the filtering zones (**F₂**, **F₃** ...**Fₙ**) corresponding each to a filtration crown comprising several channels and in which the channels are separated by flow-through partitions (**P**) for the filtrate, filtration crowns (**F₂**, **F₃** ...**Fₙ**) being distributed over concentric circles, the at least three filtering zones (**F₁**, **F₂** ...**Fₙ**) being concentrically distributed and separated from each other by a continuous porous zone (**Z₁**, **Z₂** ...**Zₙ₋₁**), corresponding to the zone lying between the outer envelope of a filtering zone and the inner envelope of the adjacent filtering zone in the direction of the periphery of the support (**1**), the mean thickness of the porous zone (**Z₁**) the closest to the central axis (**A**) being smaller than the mean thickness of the porous zone (**Zₙ₋₁**) the closest to the periphery of the support (**1**) and, in the direction moving away from the central axis (**A**) of the support towards its periphery, the mean thickness of a porous zone being either identical to the next, or smaller, provided that:
- for each of the filtering zones, the points the closest to the center of the support of each channel for one same filtering zone are located on a circle whose centre is the centre of the support, and this circle defines the inner envelope of said filtering zone,
- for each of the filtering zones, the points the furthest away from the center of the support of each channel of one same filtering zone are located on a circle whose centre is the centre of the support, and this circle defines the outer envelope of said filtering zone,
- each porous zone is delimited by two concentric circles and is of constant thickness,
**characterized in that** that the widths (**ℓ**) of the flow-through partitions (**P**) are equal within one same crown and equal from one crown to another.

2. Filtering element (**I**) according to claim 1, **characterized in that** the thickness between two adjacent continuous porous zones (**Z₁** and **Z₂** ...**Zₙ₋₂** and **Zₙ₋₁**) of different mean thickness varies by a factor of 1.01 to 3.00, and preferably from 1.10 to 1.70 in the direction moving away from the longitudinal central axis (**A**) towards the periphery of the support (**1**).

3. Filtering element (**I**) according to one of the preceding claims, **characterized in that** the ratio between the mean thickness of the porous zone the closest to the periphery of the support over the mean thickness of the porous zone the closest to the central axis lies in the range of 1.1 to 6, preferably in the range of 1.2 to 2.5.

4. Filtering element (**I**) according to one of the preceding claims, **characterized in that** the mean thickness of the peripheral zone (**Zp**) separating the outer surface (**1₁**) of the support (**1**) and the filtering zone (**Fₙ**) the closest to the outer surface of the support (**1**) is greater than the mean thickness of the porous zone (**Zₙ₋₁**) separating the filtering zone (**Fₙ**) the closest to the outer surface of the support (**1**) and the adjacent filtering zone (**Fₙ₋₁**).

5. Filtering element (**I**) according to one of the preceding claims, **characterized in that** the channels (**Cₙ₁**, **Cₙ₂**...) of one same filtering zone with several channels are all identical.

6. Filtering element (**I**) according to one of the preceding claims, **characterized in that** it comprises a central channel (**C₁₁**) for instance of circular shape, alone defining a filtering zone (**F₁**).

7. Filtering element (**I**) according to one of the preceding claims **characterized in that** the filtering zones solely consist of one circular central channel (**C₁₁**) alone defining a filtering zone (**F₁**) and a series of filtering zones (**F₂**, ...**Fₙ**) each corresponding to a filtration crown which comprises several channels and in which the channels are separated by flow-through partitions (**P**) for the filtrate, the filtration crowns being distributed concentrically to the central channel (**C₁₁**).

8. Filtering element (**I**) according to one of the preceding claims, **characterized in that** the width (**ℓ**) of each flow-through partition (**P**) over a straight cross-section of the support is constant over its entire length.

9. Filtering element (**I**) according to one of the preceding claims, **characterized in that** in each filtration crown (**F₂**, **F₃** ...**Fₙ**), the channels are of circular cross-section.

10. Filtering element (**I**) according to one of claims 1 to 8, **characterized in that** in each filtration crown (**F₂**, **F₃** ...**Fₙ**) the channels are of non-circular cross-section and for example of trapezoidal cross-section.

11. Filtering element (**I**) according to one of the preceding claims, **characterized in that** the different channels of the filtration crowns have a radial axis of symmetry relative to the centre of the support.

12. Filtering element (**I**) according to one of the preceding claims, **characterized in that** it comprises at least four filtration crowns (**F₂**, **F₃**, **F₄**, ...**Fₙ**).

13. Filtering element (**I**) according to one of the preceding claims, **characterized in that** the number of channels present in each filtering zone increases in the direction moving away from the centre (**A**) towards the periphery (**1₁**) of the support (**1**).

14. Filtering element (**I**) according to one of the preceding claims, **characterized in that** the support (**1**) is of circular or polygonal cross-section.

15. Filtering element (**I**) according to one of the preceding claims, **characterized in that** the surface (**2**) of the channels (**C₁₁**, **C₂₁, C₂₂**... **C₃₁**, **C₃₂** ...**Cₙ₁**, **Cₙ₂**...) is coated with at least one inorganic filtration layer.
